# EUROPEAN PATENT APPLICATION

(11) **EP 3 336 072 A1**
(43) Date of publication of application: **20.06.2018**
(21) Application number: 16203688.3
(22) Date of filing: 13.12.2016
(51) Int. Cl.: C05G 3/00

(54) **INORGANIC FERTILIZER PARTICLE**

(71) Applicant: YARA International ASA, 0213 Oslo (NO)
(72) Inventor: MYRSTAD, Amund, N-3711 SKIEN (NO); REISSMANN, Matti, 18182 Bentwisch (DE); TANDE, Terje, N-3970 LANGESUND (NO)
(74) Representative: Onsagers AS

(57) **Abstract**

The present disclosure concerns inorganic fertilizer particles containing all the primary fertilizer nutrients for plants (NPK). When a suitable amount of a wollastonite powder is added to a melt comprising ammonium nitrate, phosphate salts and a potassium salt, the viscosity of the melt is not increased to problematic levels and the melt solidify rapidly, thus inorganic NPK particles can be obtained from the homogeneous melt by granulation. It is found that such particles have improved surface properties including reduced porosity and/or reduced hygroscopicity.

## Description

### Field of the invention

The present disclosure concerns inorganic fertilizer particles.

### Background

The primary fertilizer nutrients for plants are based on nitrogen (N), phosphorus (P) and potassium (K). They are mainly absorbed by plants in the form of ions, such as NO₃⁻, NH₄⁺, HPO₄²⁻, H₂PO₄⁻ and K⁺. Accordingly, most inorganic fertilizers provide salts comprising some or all of the mentioned ions.

Fertilizers providing all the three primary nutrients in an available form for the plants, are often referred to as NPK fertilizers. Accordingly, pure ammonium nitrate is an N fertilizer while NP fertilizers comprise a nitrogen source and a phosphorous source available for plants. The nutrient content of NPK fertilizers is often declared as X-Y-Z wherein X value is the theoretical percentage of elemental nitrogen by weight in the fertilizer. Y is the phosphorous content corresponding to an imaginary weight fraction of P₂O₅. Z is the potassium content corresponding to an imaginary weight fraction of K₂O. According to this system, pure ammonium nitrate should be declared as 35-0-0 and pure potash (KCl) should be declared as 0-0-60.

The most common NP fertilizers comprise monoammonium phosphate or diammonium phosphate. Normally, NP particles have a higher mechanical strength, better storage properties, a lower rate of moisture absorption, and a higher critical relative humidity (CRH) than most NPK fertilizers. Thus, there is a need for improving the physical characteristics of NPK fertilizer particles.

Most fertilizers are to some extent hygroscopic. However, the moisture uptake varies significantly depending on the chemical composition and the physical form of the fertilizer. The moisture uptake correlates with the porosity of the particles, thus it is often desired to achieve a smooth surface of a fertilizer particle.

In general, water absorption of a fertilizer particle takes place if the water vapour pressure of the air exceeds the water vapour pressure of the particle. Typically, a water absorption curve ascends slowly at low humidity, but at a certain humidity or humidity range it starts to increase steeply. This humidity level is called the critical relative humidity (CRH) of the fertilizer. Usually, the CRH for blended fertilizers is below the average of the components, thus more components generally correlate with lower CRH. Accordingly, the CRH of an N fertilizer particle is often higher than for a NP fertilizer particle, and the CRH of a NP particle is often higher than for an NPK fertilizer particle. For example, the CRH for many inorganic NPKs are lower than for ammonium nitrate.

Absorption of moisture during storage and handling can reduce the physical quality of fertilizer particles. This can lead to a number of problems like softening of the particles, sticky surfaces, cracking of particles, bleaching of particles, reduced particle strength increased dusting etc. One particular problem relating to moisture absorption is the caking tendency of a fertilizer particle. Several independent mechanisms may be involved in the caking, for example chemical reactions in the finished product, dissolution and re-crystallization of fertilizer salts on the particle surface and adhesive and capillary forces between surfaces. In particular, the potassium content of NPK fertilizer particles can contribute to caking problems due to post granulation reactions including the formation of ammonium chloride and/or potassium nitrate.

Several approaches are possible to mitigate the risk of water absorption for inorganic NPK fertilizer particles. The conventional solution involves coating of the particles as described in WO2016083435 or packing in bags which are impenetrable for water vapour.

Various silicates have been used in fertilizers for a long time. Water soluble silicates like sodium metasilicate, Na₂SiO₃ are commonly used as plant nutrients. However, Calcium silicates, like calcium orthosilicate, Ca₂SiO₄ and calcium metasilicate, CaSiO₃ are generally not water soluble, and they would not be expected to be of significant nutritional value for plants. Calcium silicates were used to generate a water absorbing coating on NPK fertilizer particles as disclosed in US3961932. In US2004221631 the use of calcium silicate as a flow aid for slow release NPK tablets was mentioned. More recently, Gezerman et al (Chem. Ind. Chem. Eng. Q 21 (2) page 359-367, 2015) described the effects of adding certain silicates to ammonium nitrate prills and followed up the effects of the additives (calcium carbonate, silicic acid, sodium silicate) on structural integrity and the degradation of the particles. The addition of silicic acid reduced the caking problems of the ammonium nitrate particles.

### Summary

The present disclosure concerns inorganic fertilizer particles containing all the primary fertilizer nutrients for plants (NPK). When a suitable amount of a wollastonite powder is added to a melt comprising ammonium nitrate, phosphate salts and a potassium salt, the viscosity of the melt is not increased to problematic levels and the melt solidify rapidly, thus inorganic NPK particles can be obtained from the homogeneous melt by granulation. It is found that such particles have improved surface properties including reduced porosity and/or reduced hygroscopicity. The wollastonite powder can have a particle size distribution with low levels of respirable particles, reflected by its median particle size, which is beneficial during production of the fertilizer particles. Furthermore, the wollastonite powder also allows production of fertilizer particles without substantial amounts of aluminium containing compounds.

According to a first embodiment, the present disclosure concerns a fertilizer particle comprising the primary nutrients NPK and wollastonite wherein the fertilizer particle is inorganic.

In one particular aspect of the first embodiment, the fertilizer particle comprises 0.5 to 2.0% w/w of wollastonite particles.

In one particular aspect of the first embodiment, the fertilizer particle comprises 0.7 to 1.5% w/w wollastonite 1A particles.

In one particular aspect of the first embodiment, the fertilizer particle is made by granulation of a homogeneous melt.

In one particular aspect of the first embodiment, the fertilizer particle comprises at least one ammonium salt, nitrate salt or ammonium nitrate.

In one particular aspect of the first embodiment, the fertilizer particle comprises ammonium nitrate, ammonium phosphates and/or calcium phosphates, and potassium sulfate and/or potassium chloride.

In one particular aspect of the first embodiment, the major nitrogen source in the fertilizer particle is ammonium nitrate.

In one particular aspect of the first embodiment, the median particle size of the wollastonite particles in the fertilizer particle is in the range of 7 to 25 µm.

In one particular aspect of the first embodiment, the fertilizer particle consists of ammonium nitrate, phosphate salts, potassium salts, wollastonite particles and residual moisture.

In one particular aspect of the first embodiment, a composition is provided comprising the granulated fertilizer particles wherein more than 50% of the volume of the fertilizer particles has a diameter in the range of 2 to 5 mm.

According to a second embodiment, the present disclosure concerns a method for producing inorganic NPK fertilizer particles comprising the steps of
a. heating a composition comprising ammonium nitrate and a phosphate salt to form a melt and adding a wollastonite powder and a potassium salt to the melt ; or
b. heating a composition comprising ammonium nitrate, a phosphate salt, a potassium salt and a wollastonite powder to form a melt
c. particulation of the melt from step a. or b.

In one particular aspect of the second embodiment, 0.5 to 2.0% w/w of the melt is wollastonite 1A powder.

In one particular aspect of the second embodiment, the phosphate salt is selected from calcium phosphates and ammonium phosphates.

In one particular aspect of the second embodiment, the potassium salt is selected from potassium chloride and potassium sulfate.

In one particular aspect of the second embodiment the composition is heated to a temperature in the range of 100 to 200°C.

In one particular aspect of the second embodiment the composition comprises less than 5% w/w water.

In one particular aspect of the second embodiment, the particulation is performed by prilling, drum granulation or pan granulation.

In one particular aspect of the second embodiment, the particulation mechanism is agglomeration, layering or globulation.

### Brief description of the figures:

Figure 1 shows the surface of NPK hemispheres as described in Example 1.
Figure 2 shows the surface of NPK hemispheres as described in Example 2.
Figure 3 shows the reduction of water absorption of NPK hemispheres produced according to Example 3.
Figure 4 shows the surface of NPK hemispheres as described in Example 4.
Figure 5 shows the surface of NPK hemispheres as described in Example 5.

### Detailed description

Inorganic fertilizer particles can be produced from fertilizer salts or aqueous solutions of fertilizer salts. Many industrial processes involve heating the salts or solutions, evaporating sufficient water to form homogeneous melts which are subsequently solidified to particles. It is common in such particulation processes to spray the melt through nozzles, thus high viscosity melts can cause clogging. Furthermore, some melts may not solidify rapidly enough to be suitable for prilling, drum granulation or pan granulation. The physical characteristics of fertilizer particles from such granulation processes and much of the know-how relating to fertilizer particles and melts are based on empirical knowledge.

According to the present disclosure, it is found that addition of a wollastonite powder to an NPK fertilizer melt allows successful granulation of particles. These particles have reduced porosity of the surface. In contrast, particles made from an NPK fertilizer melt comprising magnesium oxide, magnesium silicate or sodium silicate did not provide a shiny surface. Without being bound by theory, the improved surface may influence the hygroscopicity of the inorganic NPK fertilizer particle as demonstrated in the examples. Inorganic NPK fertilizer particles comprising wollastonite particles have reduced hygroscopicity compared to inorganic NPK fertilizer particles comprising magnesium oxide, hydrated magnesium silicate or sodium silicate.

As used herein, primary nutrients means nitrogen (N), phosphorus (P) and potassium (K) in a non-toxic available form for the plants. Accordingly, NPK fertilizers means fertilizers comprising sources of all the three primary nutrients. An NPK particle is an NPK fertilizer in solid form. Accordingly, an inorganic NPK particle comprises some or all of the following ions NO₃⁻, NH₄⁺, HPO₄²⁻, H₂PO₄⁻ and K⁺. In particular, the nitrogen (N) source may be ammonium nitrate; the phosphorous (P) source may be calcium phosphates and/or ammonium phosphates and the potassium (K) source may be potassium chloride and/or potassium sulfate. In particular, the major nitrogen source may be ammonium nitrate. As used herein, the major nitrogen source in the fertilizer particles means the salt providing most nitrogen in an available form to the plants.

Furthermore, it is found that the inorganic NPK fertilizer particles in the present disclosure can be produced by melt granulation. Prilling is one type of a melt granulation that can produce reasonably spherical particles via solidifying falling liquid drops. The viscosity of such melts is of high importance for an industrial melt granulation process, but addition of 0.5 to 5% w/w wollastonite powder to a homogeneous melt comprising ammonium nitrate, phosphate salts and a potassium salt did not increase the viscosity to problematic levels in spite of the needle shape of the wollastonite particles. Thus, the inorganic NPK fertilizer particles in the present disclosure can also be produced by drum granulation or pan granulation (layering of droplets/agitation) or by cooling belt technology (pastillation). Such melt granulation processes are well known to the skilled person. It is however often desired to produce inorganic NPK fertilizer particles by prilling, spherodizing, drum granulation or pan granulation, because such particles tend to be more spherical and more uniform with respect to size.

A homogeneous melt, as used herein, means that the melt is essentially uniform with respect to its composition, however, the homogeneous melt may contain some solid particles. When producing NPK particles by melt granulation, it is common to add potassium salt in the form of a powder to the melt. Some potassium salts like KCl and K₂SO₄ may not dissolve or dissolve only partly into the melt depending on the composition, temperature and water content. If the homogeneous melt comprises solid particles, it can be considered to be a slurry. It is also possible to add potassium in the form of an aqueous solution comprising a dissolved potassium salt. When fertilizer particles are granulated from a homogeneous melt, the nutrient composition throughout the particles is also essentially homogeneous. Fertilizer particles made from homogeneous melts are generally preferred over heterogeneous particles because they allow a more uniform release of the nutrients. Inorganic NPK particles produced by melt granulation processes like prilling, spherodizing, drum granulation, pan granulation or pastillation may have superior physical properties compared to inorganic NPK particles made by compression of powders.

In contrast, a fertilizer particle which is heterogeneous, as used herein, varies in its nutrient composition throughout the particle. For example, if nutrients are applied in the coating of a particle, it is considered to be heterogeneous. Heterogeneous particles can also be obtained by blending of fertilizer powders together with a binder by compression or extrusion. Inorganic NPK fertilizer particles made by melt granulation are generally preferred over NPK fertilizer blends, heterogeneous NPK fertilizer particles and organic NPK fertilizers.

Wollastonite is a calcium metasilicate mineral occurring in three different forms, depending on its crystal structure. Common wollastonite is known as Wollastonite 1A, indicating that it is one form of wollastonite that crystallizes in a triclinic system. As used herein, a wollastonite 1A powder means a powder that can be obtained from a wollastonite 1A mineral. Two other forms of wollastonite; wollastonite 2M and wollastonite 7A crystallize in a monoclinic system or a triclinic system respectively.

Without being bound by theory, inorganic NPK particles made by melt granulation from a homogeneous melt wherein a wollastonite powder is added, are assumed to comprise the wollastonite particles from the wollastonite powder. Thus, the suitable amount of wollastonite particles in the inorganic NPK fertilizer particles is 0.1 to 5.0% w/w. More particularly, the wollastonite particles may be present in about 0.5 to 2.0% w/w of the inorganic NPK particles. More particularly, wollastonite 1A particles may be present in about 0.7 to 1.5% w/w of the inorganic NPK particles. Another suitable range for inorganic NPK fertilizer particles is 1.0 to 2.0% w/w wollastonite particles. Another suitable range for inorganic NPK fertilizer particles is 1.0 to 1.5% w/w wollastonite particles. Another suitable range for inorganic NPK fertilizer particles is 1.1 to 1.5% w/w wollastonite particles. A particularly suitable amount for inorganic NPK fertilizer particles is about 1.0% w/w wollastonite particles.

Small median particle size of powders correlates with dusting problems and can pose a health hazard during production and handling of fertilizer particles. Suitable median particle size of the wollastonite particles present in the inorganic NPK fertilizer particles can be 5 to 100 µm. In particular, the median particle size of wollastonite particles in the inorganic NPK fertilizer particles can be 7.0 to 25.0 µm. In particular, a very suitable median particle size of wollastonite particles in the inorganic NPK fertilizer particles can be 10 to 20 µm. By using a wollastonite powder with a median particle size larger than 7 µm, improved inorganic NPK fertilizer particles can be provided without addition of a powder comprising a substantial level of respirable particles..

As used herein, the median particle size of the powder particles is the median volume based value (d50) that can be obtained with conventional laser diffraction techniques relying on their pertaining assumptions including random particle orientation, non-transparent particles and spherical shape. Crushing of common wollastonite rock to powder tends to generate needle shaped particles with a ratio of length to diameter from around 3:1 to around 20:1. Without wishing to be bound by theory, such elongated particles may reinforce the inorganic NPK fertilizer particles. Powders comprising particles with elongated shape will tend to indicate a lower particle size value than spherical particles when measured by laser diffraction techniques. Thus, a wollastonite powder with a median particle size in the range of 5 to 100 µm may contain insignificant amounts of respirable particles.

Some prior art NPK particles comprise clays. Many clays, like kaolin clay, contain aluminium salts which can be dissolved at acidic pH. However, a variety of plants are sensitive to aluminium ions even at low concentrations and the most recognized symptom of aluminium toxicity in plants is the inhibition of root elongation. One example of prior art, US3325276, disclosed that granular or prilled ammonium nitrate powder can be rendered substantially cake-resistant by mixing dry ammonium nitrate with a finely divided synthetic siliceous pigment commingled with a mineral acid prior to bagging the product for shipping and storage. The conditioners included modified kaolin clay and ordinary kaolin clay (Al₂Si₂O₅(OH)₄). Wollastonite, in contrast to kaolin clay, does only contain minute amounts of aluminium if any.

The life cycle carbon footprint of urea fertilizers is higher than that of fertilizers based on nitrate salts as the N source. It is therefore an environmental advantage to provide inorganic NPK fertilizer particles wherein the nitrogen source is based on ammonium and/or nitrates instead of urea. Accordingly, the nitrogen source of the inorganic NPK fertilizer particles comprising wollastonite particles may be any non-toxic ammonium or nitrate salt, but ammonium nitrate is particularly suitable because it provides nitrogen available for the plants from both the cation and the anion. Thus, the ammonium nitrate content of fertilizer particles comprising the primary nutrients NPK and 0.5 to 2.0% w/w wollastonite particles wherein the fertilizer particle is inorganic can be in the range of 20 to 90% w/w. In particular, it can be 20 to 80% w/w, 25 to 70% w/w or 25 to 60% w/w. In particular, a fertilizer particle comprising the primary nutrients NPK and 0.5 to 2.0% w/w wollastonite particles wherein the fertilizer particle is inorganic, can comprise 25 to 50% w/w ammonium nitrate. Methods for detecting crystalline ammonium nitrate are well known to a skilled person, for example as disclosed in Talanta, 2013 Oct 15;115:533-9 by Corbin and McCord. Methods for measuring the N content of a fertilizer particle are also well known to a skilled person for example by the Kjeldahl method (Zeitschrift fur analytische Chemie, 1883, 22 (1) : 366-383 by Kjeldahl. Further tests are well known as described in "Testing Methods for Fertilizers" (2013) by the Japanese Incorporated Administrative Agency for Food and Agricultural Materials Inspection Center.

The improved inorganic NPK fertilizer particles may comprise 20 to 40% w/w of phosphate salts. According to the present disclosure, the phosphate salts can be any non-toxic phosphate salt providing phosphate ions to the plants. Such salts include, but are not limited to CaHPO₄, Ca(H₂PO₄)₂, Ca₃(PO₄)₂, NH₄H₂PO₄, and (NH₄)₂HPO₄. Methods for measuring the amount of phosphate salts in fertilizer particles are well known to a skilled person, for example as disclosed in "Evaluation of Commonly Used Methods for the Analysis of Acid-Soluble Phosphate in Internationally Traded Inorganic Fertilizers" by The International Fertilizer Industry Association June 2014 or
Testing Methods for Fertilizers" (2013) by the Japanese Incorporated Administrative Agency for Food and Agricultural Materials Inspection Center.

The improved inorganic NPK fertilizer particles may comprise 1 to 30% w/w of potassium salts. In particular, they may comprise 5 to 30% w/w of potassium salts. According to the present disclosure, the potassium salts can be any non-toxic potassium salt providing potassium ions to the plants. Such salts include, but are not limited to KCl and K₂SO₄. Accordingly, the improved inorganic NPK fertilizer particles may comprise 5 to 30% w/w of potassium chloride. Accordingly, the improved inorganic NPK fertilizer particles may comprise 20 to 30% w/w of potassium chloride. Methods for measuring the amount of potassium salts or potassium chloride in a fertilizer particle are well known to a skilled person, for example as disclosed in "Testing Methods for Fertilizers" (2013) by the Japanese Incorporated Administrative Agency for Food and Agricultural Materials Inspection Center.

In particular, the improved inorganic NPK fertilizer particles may comprise 25 to 50% w/w ammonium nitrate, 20 to 40% w/w phosphate salts, 5 to 25% w/w of potassium chloride and about 1% w/w of wollastonite.

On the other hand, US3379496 disclosed ammonium nitrate particles with improved physical properties by addition 0.25% to 4.0% by weight of a substantially insoluble, finely divided seeding agent to a substantially anhydrous melt before granulation. The seeding agent could for example be silicates, silicate-containing clays, metal oxides, tricalcium phosphate. It was mentioned that excellent results have been obtained by addition of kaolin ground to a particle size of about 5 micron, a precipitated silica, a processed calcium silicate-containing material under the registered trademark "Micro-Cel", a precipitated magnesium oxide, a commercial grad zinc oxide. However, example 1 in the present disclosure demonstrates that for an inorganic NPK particle, wollastonite provides a different effect than magnesium oxide, hydrated magnesium silicate and sodium silicate.

The inorganic NPK fertilizer particles according to the present disclosure may be applied to fields by spreading machines. For efficient distribution by conventional machines, an average diameter in the range of 1 to 10 mm can be suitable. It is particularly beneficial that more than 50% of the volume of NPK particles have a diameter in the range of 2 to 5 mm as measured by conventional sieving.

The inorganic NPK fertilizer particles in the present disclosure can, if desired, be coated with conventional technologies to further improve their robustness or to provide specific nutrients. The reduced porosity of the inorganic NPK fertilizer particles comprising 0.5 to 2.0% w/w wollastonite is thus a further advantage with respect to efficient coating. For these particles, less coating material is needed for obtaining a continuous coating protecting the particle core.

Even though the fertilizer salts may be simple and their characteristics may be known, their physical and chemical behaviour becomes more complex when mixed. Some combinations of nutrient salts may cause cross contamination and other problems in safety and/or quality. For high quality fertilizer particles, urea is not considered compatible with ammonium nitrate or ammonium phosphates. Particles comprising urea and ammonium nitrate or ammonium phosphates will likely absorb moisture resulting in the formation of a liquid or slurry.

Urea is furthermore an organic compound. According to the present disclosure, fertilizers containing substantial amounts of organic compounds are considered to be organic fertilizers. According to GB1311065, a granular calcium nitrate-urea double salt has a high particle hardness and consequently good storage properties when it contains as an additive one or more inorganic salts selected from sulfates and carbonates of sodium, magnesium, calcium, copper and iron; silicates and chlorides of magnesium, calcium, copper and iron; and nitrates of sodium, magnesium, copper and iron in a total amount of from 0.5 to 5% by weight based on the double salt. Calcium silicate provided the highest fragmentation pressure followed by sodium carbonate, iron(III)chloride and magnesium nitrate.

As used herein, substantial amounts of organic compounds means more than 5% w/w of the organic compounds. Accordingly, inorganic particles comprise 5% w/w or less of organic compounds. In particular, the inorganic particles may comprise less than 3% w/w organic compounds or less than 1 % w/w of organic compounds. In particular, a fertilizer particle comprising the primary nutrients NPK and wollastonite particles may comprise essentially no organic compounds. As used herein, % w/w means the weight percentage.

The present invention is defined by the claims and not by the following examples:

### EXAMPLES

### Example 1: Various additives affecting the surface.

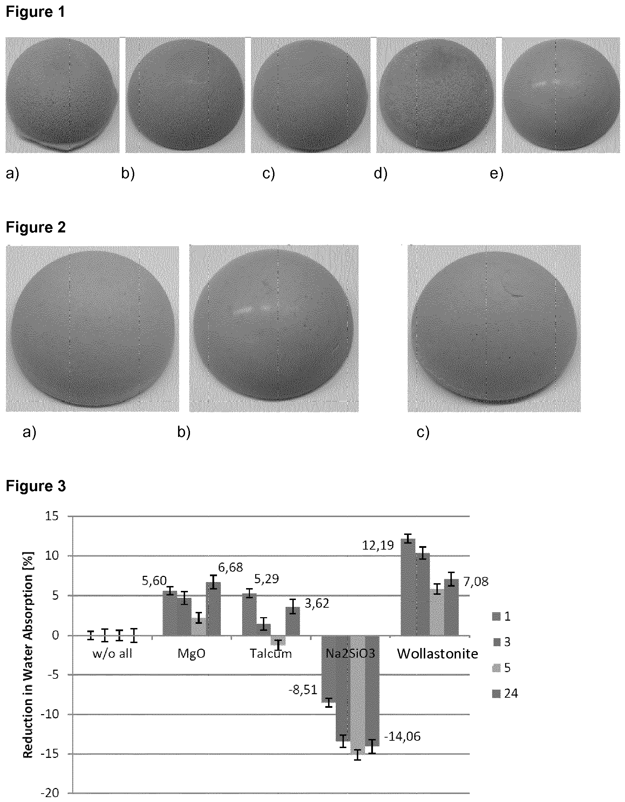

100 g of a melt comprising ammonium nitrate and ammonium phosphates with a water content of 2.5% w/w was heated to 160°C. To this melt, 35 g of a KCl powder was added to achieve a 15-15-15 composition. Four different additives was added (1.35 g) to respective samples of the melt. After mixing for 6 minutes, each melt sample was solidified into a hemisphere and compared to a hemisphere without the additive powder (see Figure 1):
a) Inorganic NPK fertilizer hemisphere without additive (control),
b) Inorganic NPK fertilizer hemisphere comprising 1.0% w/w magnesium oxide.
c) Inorganic NPK fertilizer hemisphere comprising 1.0% w/w hydrated magnesium silicate (talcum).
d) Inorganic NPK fertilizer hemisphere comprising 1.0% w/w sodium silicate.
e) Inorganic NPK fertilizer hemisphere comprising 1.0% w/w wollastonite particles.

All the additive powders were roughly of the same median particle size (d50 ≈ 10 µm).

Visual inspection of the five hemispheres revealed that the only shiny hemisphere was e):

| **NPK hemisphere** | **Visual smoothness** |
|---|---|
| a) | - |
| b) | + |
| c) | + |
| d) | - |
| e) | +++ |

### Example 2: Amount of wollastonite affecting the surface.

Three inorganic NPK hemispheres (15-15-15) produced according to the process in example 1 except that either 0.5% w/w, 1.0% w/w or 2.0% w/w wollastonite powder (Sigma, particles size 7 to 10µm) was added to the melt (see Figure 2):
a) Inorganic NPK fertilizer hemisphere comprising 0.5% w/w wollastonite particles.
b) Inorganic NPK fertilizer hemisphere comprising 1.0% w/w wollastonite particles.
c) Inorganic NPK fertilizer hemisphere comprising 2.0% w/w wollastonite particles.

Visual inspection of the three hemispheres revealed that hemisphere b) was most shiny:

| **NPK hemisphere** | **Visual smoothness** |
|---|---|
| a) | + |
| b) | +++ |
| c) | + |

### Example 3: Hygroscopicity of hemispheres

Inorganic hemispheres produced according to example 1 were tested for water absorption at 60% relative humidity (RH) at 25°C after 1, 3, 5 and 24 hours. A hemisphere without additive was used as control (see Figure 3). In figure 3 the time increases in the direction of the x-axis for each additive, so that for each additive the left bar is after 1 hour and the right bar is after 24 hours. The hemispheres contained 1.0 % w/w of one of the additives magnesium oxide, talcum (hydrated magnesium silicate), sodium silicate or wollastonite and compared to an NPK hemisphere without such additive. As can be seen from results, the inorganic NPK hemisphere comprising 1.0% w/w wollastonite absorbed 12% less water than the control hemisphere after 1 hour. The NPK hemispheres comprising 1.0% w/w magnesium oxide or hydrated magnesium silicate absorbed about 5 % less water than the control hemisphere after 1 hour. The NPK hemisphere comprising 1.0% w/w sodium silicate absorbed 8% more water than the control hemisphere after 1 hour.

### Example 4: Wollastonite effect on two different NPK compositions.

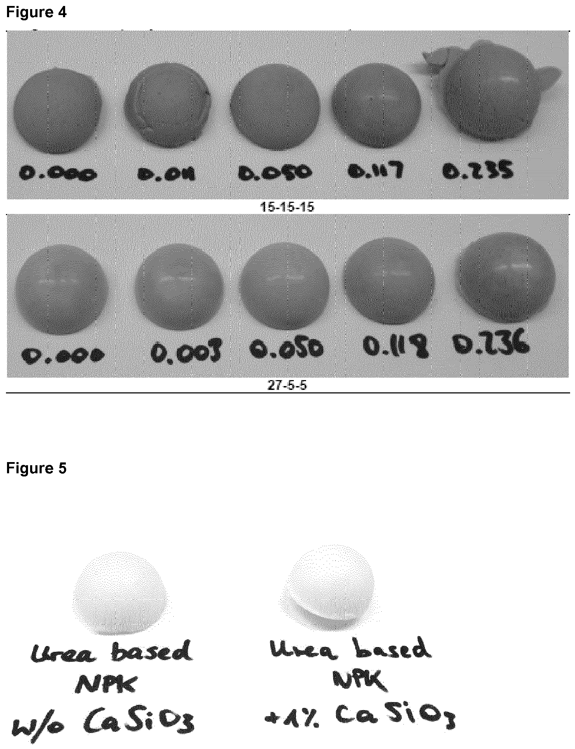

Various amounts of wollastonite powder was added to two inorganic NPK compositions, 15-15-15 and 27-5-5, essentially by the same process as described in example 1. Both the 15-15-15 and the 27-5-5 composition comprised ammonium nitrate, ammonium phosphates, potassium chloride, fillers and residual water. The ratio of wollastonite to the ammonium nitrate content was 0, 0.011, 0.050, 0.117 or 0.235 for the 15-15-15 product. The ratio of wollastonite to the ammonium nitrate content was 0, 0.003, 0.050, 0.118 or 0.236 for the 27-5-5 product. The wollastonite seemed to have better impact on the surface of the 15-15-15 product than for the 27-5-5 product (see Figure 4). The top row in Figure 4 from left to right are NPK hemispheres (15-15-15) comprising a weight ratio of wollastonite particles to ammonium nitrate of 0, 0.011, 0.050, 0.117 or 0.235. This corresponds to 0%, 0.5%, 1.0%, 4.0% and 8.0% w/w respectively of wollastonite. The bottom row from left to right are NPK hemispheres (27-5-5) comprising a weight ratio of wollastonite particles to ammonium nitrate of 0, 0.003, 0.050, 0.118 or 0.236. This corresponds to 0%, 0.5%, 1.0%, 4.0% and 8.0% w/w respectively of wollastonite.

| **NPK hemisphere 15-15-15** | **Visual smoothness** | **Wollastonite w/w** |
|---|---|---|
| a) | - | 0% |
| b) | - | 0,5% |
| c) | + | 1.0% |
| d) | + | 4.0% |
| e) | + | 8.0% |

| **NPK hemisphere 27-5-5** | **Visual smoothness** | **Wollastonite w/w** |
|---|---|---|
| a) | + | 0% |
| b) | + | 0,5% |
| c) | + | 1.0% |
| d) | + | 4.0% |
| e) | + | 8.0% |

### Example 5: Wollastonite effect on NPK hemispheres comprising urea

Two hemispheres produced essentially by the same process as described in example 1 were examined. No visual difference was observed for an NPK hemisphere (19-20-21) consisting of urea, mono ammonium phosphate, potassium chloride and residual water compared to the same with 1.0% w/w wollastonite.

| **NPK hemisphere 19-20-21** | **Visual smoothness** | **Wollastonite w/w** |
|---|---|---|
| a) | - | 0% |
| b) | - | 1.0% |

In the examples the visual smoothness is indicated by - or +, where - indicate a porous surface, and the number of +'s indicate the degree of smoothness.

## Claims

1. A fertilizer particle comprising the primary nutrients NPK and wollastonite wherein the fertilizer particle is inorganic.

2. A particle according to claim 1, comprising 0.5 to 2.0% w/w of wollastonite particles.

3. A particle according to any one of claim 1 to 2, comprising 0.7 to 1.5% w/w wollastonite 1A particles.

4. A particle according to any one of claim 1 to 3, made by granulation of a homogeneous melt.

5. A particle according to any one of claim 1 to 4, comprising at least one ammonium salt, nitrate salt or ammonium nitrate.

6. A particle according to any one of claim 1 to 5, comprising
a. ammonium nitrate,
b. ammonium phosphates and/or calcium phosphates, and
c. potassium sulfate and/or potassium chloride.

7. A particle according to any one of claim 1 to 6, wherein a major nitrogen source is ammonium nitrate.

8. A particle according to any one of claim 1 to 7, wherein the median particle size of the wollastonite particles is in the range of 7 to 25 µm.

9. A particle according to any one of claim 1 to 8, consisting of ammonium nitrate, phosphate salts, potassium salts, wollastonite particles and residual moisture.

10. A composition comprising granulated fertilizer particles according to any one of claim 1 to 9 wherein more than 50% of the volume of particles has a diameter in the range of 2 to 5 mm.

11. A method for producing inorganic NPK fertilizer particles comprising the steps of
a. heating a composition comprising ammonium nitrate and a phosphate salt to form a melt and adding a wollastonite powder and a potassium salt to the melt ; or
b. heating a composition comprising ammonium nitrate, a phosphate salt, a potassium salt and a wollastonite powder to form a melt
c. particulation of the melt from step a. or b.

12. A method according to claim 11, wherein 0.5 to 2.0% w/w of the melt is wollastonite 1A powder.

13. A method according to any one of claim 11 to 12, wherein the phosphate salt is selected from calcium phosphates and ammonium phosphates.

14. A method according to any one of claim 11 to 13, wherein the potassium salt is selected from potassium chloride and potassium sulfate.

15. A method according to any one of claim 11 to 14, wherein the composition is heated to a temperature in the range of 100 to 200°C.

16. A method according to any one of claim 11 to 15, wherein the melt comprises less than 5% w/w water.

17. A method according to any one of claim 11 to 16, wherein particulation is performed by prilling, drum granulation or pan granulation.

18. A method according to anyone of claim 11 to 17, wherein the particulation mechanism is agglomeration, layering or globulation.
